(19) Europäisches Patentamt
European Patent Office
Office européen des brevets

(11) EP 3 503 549 A1

(12) EUROPEAN PATENT APPLICATION

(43) Date of publication:
26.06.2019 Bulletin 2019/26

(51) Int Cl.:
H04N 19/176 (2014.01)     H04N 19/61 (2014.01)
H04N 19/12 (2014.01)      H04N 19/122 (2014.01)
H04N 19/156 (2014.01)     H04N 19/157 (2014.01)
H04N 19/147 (2014.01)

(21) Application number: 17306894.1

(22) Date of filing: 22.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: THOMSON LICENSING
92130 Issy les Moulineaux (FR)

(72) Inventors:
• LELEANNEC, Fabrice
  35576 Cesson-Sévigné (FR)
• GALPIN, Franck
  35576 Cesson-Sévigné (FR)
• NASER, Karam
  35576 Cesson-Sévigné (FR)

(74) Representative: Huchet, Anne et al
InterDigital CE Patent Holdings
20, rue Rouget de Lisle
92130 Issy-les-Moulineaux (FR)

(54) **METHOD AND APPARATUS FOR VIDEO COMPRESSION USING EFFICIENT MULTIPLE TRANSFORMS**

(57)     The present embodiments relate to a method and an apparatus for efficiently encoding and decoding video using multiple transforms. For example, a horizontal transform or a vertical transform may be selected from a set of transforms to transform prediction residuals of a current block of a video picture being encoded. In one example, the set of transforms includes: 1) only one transform with a constant lowest frequency basis function, 2) one or more transform with an increasing lowest frequency basis function, and 3) only one transform with a decreasing lowest frequency basis function. In one embodiment, the transform with a constant lowest frequency basis function is DCT-II, the transform with an increasing lowest frequency basis function is DST-VII (and DST-IV), and the transform with a decreasing lowest frequency basis function is DCT-VIII. At the decoder side, the corresponding inverse transforms are selected.

FIG. 6A

EP 3 503 549 A1

**Description**

TECHNICAL FIELD

The present embodiments generally relate to a method and an apparatus for video encoding and decoding, and more particularly, to a method and an apparatus for efficiently encoding and decoding video using multiple transforms.

BACKGROUND

To achieve high compression efficiency, image and video coding schemes usually employ predictive and transform coding to leverage spatial and temporal redundancy in the video content. Generally, intra or inter prediction is used to exploit the intra or inter frame correlation, then the differences between the original blocks and the predicted blocks, often denoted as prediction errors or prediction residuals, are transformed, quantized, and entropy coded. To reconstruct the video, the compressed data is decoded by inverse processes corresponding to the prediction, transform, quantization, and entropy coding.

Recent additions to video compression technology include various versions of the reference software and/or documentations Joint Exploration Model (JEM) being developed by the Joint Video Exploration Team (JVET). The aim of JEM is to make further improvements to the existing HEVC (High Efficiency Video Coding) standard.

SUMMARY

According to a general aspect of at least one embodiment, a method for video encoding is presented, comprising: selecting a horizontal transform and a vertical transform from a set of transforms to transform prediction residuals of a current block of a video picture being encoded, wherein the set of transforms includes: 1) only one transform with a constant lowest frequency basis function, 2) one or more transforms with an increasing lowest frequency basis function, and 3) only one transform with a decreasing lowest frequency basis function; providing at least a syntax element indicting the selected horizontal and vertical transforms; transforming the prediction residuals of the current block using the selected horizontal and vertical transforms to obtain transformed coefficients for the current block; and encoding the syntax element and the transformed coefficients of the current block.

According to another general aspect of at least one embodiment, a method for video decoding is presented, comprising: obtaining at least a syntax element indicting a horizontal transform and a vertical transform; selecting, based on the syntax element, the horizontal and vertical transforms from a set of transforms to inversely transform transformed coefficients of a current block of a video picture being decoded, wherein the set of transforms includes: 1) only one transform with a constant lowest frequency basis function, 2) one or more transforms with an increasing lowest frequency basis function, and 3) only one transform with a decreasing lowest frequency basis function; inversely transforming the transformed coefficients of the current block using the selected horizontal and vertical transforms to obtain prediction residuals for the current block; and decoding the current block using the prediction residuals.

According to another general aspect of at least one embodiment, an apparatus for video encoding is presented, comprising at least a memory and one or more processors, wherein said one or more processors are configured to: select a horizontal transform and a vertical transform from a set of transforms to transform prediction residuals of a current block of a video picture being encoded, wherein the set of transforms includes: 1) only one transform with a constant lowest frequency basis function, 2) one or more transforms with an increasing lowest frequency basis function, and 3) only one transform with a decreasing lowest frequency basis function; provide at least a syntax element indicting the selected horizontal and vertical transforms; transform the prediction residuals of the current block using the selected horizontal and vertical transforms to obtain transformed coefficients for the current block; and encode the syntax element and the transformed coefficients of the current block.

According to another general aspect of at least one embodiment, an apparatus for video encoding is presented, comprising: means for selecting a pair of horizontal and vertical transforms from a set of a plurality of transforms to transform prediction residuals of a current block of a video picture being encoded, wherein the set of the plurality of transforms consists of: 1) a transform with a constant lowest frequency basis function, 2) a transform with an increasing lowest frequency basis function, and 3) a transform with a decreasing lowest frequency basis function; means for providing at least a syntax element indicting the selected pair of horizontal and vertical transforms; means for transforming the prediction residuals of the current block using the selected pair of horizontal and vertical transforms to obtain a set of transformed coefficients for the current block; and means for encoding the syntax element and the transformed coefficients of the current block.

According to another general aspect of at least one embodiment, an apparatus for video decoding is presented, comprising at least a memory and one or more processors, wherein said one or more processors are configured to: obtain at least a syntax element indicting a horizontal transform and a vertical transform; select, based on the syntax element, the horizontal and vertical transforms from a set of transforms to inversely transform transformed coefficients of a current block of a video picture being decoded, wherein the set of transforms includes: 1) only one transform with a constant lowest frequency basis function, 2) one or more transforms with an increasing lowest frequency basis function, and 3) only one transform with a decreasing lowest frequency basis function; inversely transform the transformed coefficients of the current block using the selected horizontal and vertical transforms to obtain prediction residuals for the current block; and decode the current block using the prediction residuals.

According to another general aspect of at least one embodiment, an apparatus for video decoding is presented, comprising: means for obtaining at least a syntax element indicting a selected pair of horizontal and vertical transforms; means for selecting, based on the syntax element, the pair of horizontal and vertical transforms from a set of a plurality of transforms to inversely transform transformed coefficients of a current block of a video picture being decoded, wherein the set of the plurality of transforms consists of: 1) a transform with a constant lowest frequency basis function, 2) a transform with an increasing lowest frequency basis function, and 3) a transform with a decreasing lowest frequency basis function; means for inversely transforming the transformed coefficients of the current block using the selected pair of horizontal and vertical transforms to obtain prediction residuals for the current block; and means for decoding the current block using the prediction residuals

In one embodiment, the syntax element comprises an index indicating which transform in a subset of a plurality of subsets, to use for the selected horizontal transform or vertical transform. The number of transforms in the subset may be set to 2. The index may contain two bits, with one bit indicating the selected horizontal transform and the other bit indicating the selected vertical transform.

In one embodiment, the transform with a constant lowest frequency basis function is DCT-II, the transform with an increasing lowest frequency basis function is DST-VII, and the transform with a decreasing lowest frequency basis function is DCT-VIII.

In another embodiment, the set of transforms additionally includes another transform with a decreasing lowest frequency basis function. The another transform with a decreasing lowest frequency basis function may be DST-IV.

The selection of the horizontal and vertical transforms may depend on a block size of the current block, and the number of transforms in the set of transforms may depend on the block size.

According to another general aspect of at least one embodiment, the subset is derived based on coding mode of the current block.

In one low complexity embodiment, the plurality of subsets are: {DST-VII, DCT-VIII}, {DST-IV, DCT-II}, and {DCT-VIII, DST-VII}. In one high complexity embodiment, the plurality of subsets are: {DST-VII, DCT-VIII}, {DST-VII, DCT-II}, and {DST-VII, DCT-II}.

According to another general aspect of at least one embodiment, a bitstream is presented, wherein the bitstream is formed by: selecting a horizontal transform and a vertical transform from a set of transforms to transform prediction residuals of a current block of a video picture being encoded, wherein the set of the plurality of transforms includes: 1) only one transform with a constant lowest frequency basis function, 2) one or more transforms with an increasing lowest frequency basis function, and 3) only one transform with a decreasing lowest frequency basis function; providing at least a syntax element indicting the selected horizontal and vertical transforms; transforming the prediction residuals of the current block using the selected horizontal and vertical transforms to obtain transformed coefficients for the current block; and encoding the syntax element and the transformed coefficients of the current block.

One or more of the present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and apparatus for transmitting the bitstream generated according to the methods described above.

BRIEF DESCRIPTION OF THE DRAWINGS

FIG. 1 illustrates a block diagram of an exemplary video encoder.

FIG. 2 illustrates a block diagram of an exemplary video decoder.

FIG. 3A is a pictorial example depicting intra prediction directions and corresponding modes in HEVC, and FIG. 3B is a pictorial example depicting intra prediction directions and corresponding modes in JEM.

FIG. 4 is an illustration of a 2D transformation of a residual MxN block U by a 2D MxN transform.

FIG. 5 shows the pictorial representations of the basis functions for the different transforms shown in Table 1.

FIG. 6A shows the plots of the amplitude vs. the index j of the first basis functions (i.e., i=0) for DCT-II, DCT-VIII, DST-IV and DST-VII transforms, and FIG. 6B shows the plots of the amplitude vs. the index j of the first basis functions (i.e., i=0) for JVET transforms.

FIG. 7 illustrates an exemplary encoding process using multiple transforms, according to an embodiment.

FIG. 8 illustrates an exemplary decoding process using multiple transforms, according to an embodiment.

FIG. 9 illustrates an exemplary process to determine the transform indices indicating the horizontal and vertical transforms to be used for encoding/decoding, according to an embodiment.

FIG. 10 illustrates the plots of the amplitude vs. the index j of the first basis functions (i.e., i=0) for DCT-I, DCT-V and DCT-VI transforms.

FIG. 11 illustrates the plots of the amplitude vs. the index j of the first basis functions (i.e., i=0) for DST-III and DST-VIII transforms.

FIG. 12 illustrates the plots of the amplitude vs. the index j of the first basis functions (i.e., i=0) for DCT-III, DCT-IV, and DCT-VII transforms.

FIG. 13 illustrates a block diagram of an exemplary system in which various aspects of the exemplary embodiments may be implemented.

DETAILED DESCRIPTION

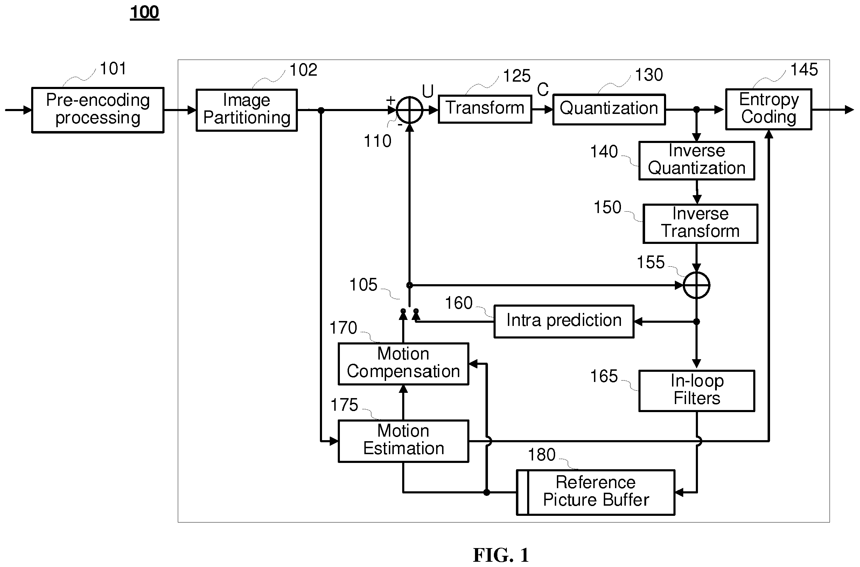

FIG. 1 illustrates an exemplary video encoder 100, such as a High Efficiency Video Coding (HEVC) encoder. FIG. 1 may also illustrate an encoder in which improvements are made to the HEVC standard or an encoder employing technologies similar to HEVC, such as a JEM (Joint Exploration Model) encoder under development by JVET (Joint Video Exploration Team).

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In HEVC, to encode a video sequence with one or more pictures, a picture is partitioned (102) into one or more slices where each slice can include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding in HEVC, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU.

In JEM, the QTBT (Quadtree plus Binary Tree) structure removes the concept of multiple partition types in HEVC, i.e., removes the separation of CU, PU and TU concepts. A Coding Tree Unit (CTU) is first partitioned by a quadtree structure. The quadtree leaf nodes are further partitioned by a binary tree structure. The binary tree leaf node is named as Coding Units (CUs), which is used for prediction and transform without further partitioning. Thus, the CU, PU and TU have the same block size in the new coding QTBT block structure. In JEM, a CU consists of Coding Blocks (CBs) of different color components.

In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

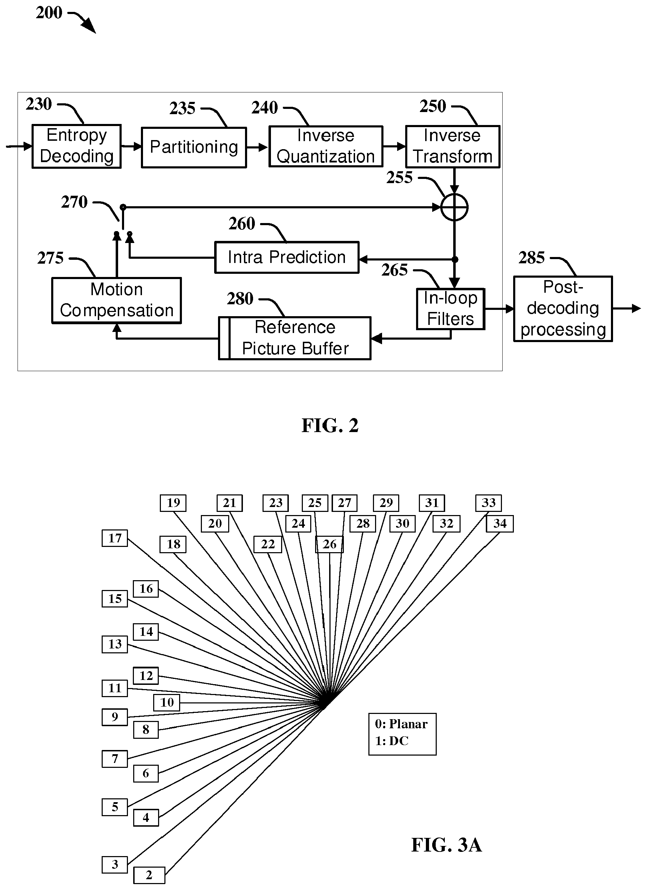

CUs in intra mode are predicted from reconstructed neighboring samples within the same slice. A set of 35 intra prediction modes is available in HEVC, including a DC, a planar, and 33 angular prediction modes as shown in FIG. 3A. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options in HEVC. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

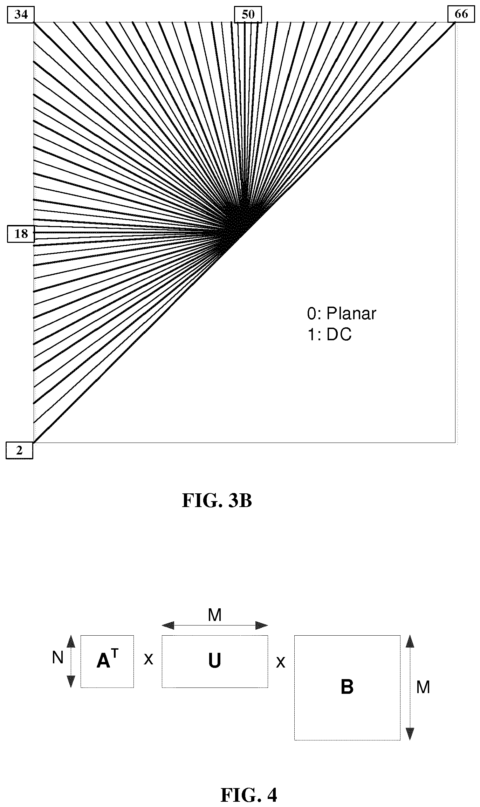

Current proposals in JEM increase the number of the intra prediction modes compared with HEVC. For example, as shown in FIG. 3B, JEM 3.0 uses 65 directional intra prediction modes in addition to the planar mode 0 and the DC mode 1. The directional intra prediction modes are numbered from 2 to 66 in the increasing order, in the same fashion as done in HEVC from 2 to 34 as shown in FIG. 3A. The 65 directional prediction modes include the 33 directional prediction modes specified in HEVC plus 32 additional directional prediction modes that correspond to angles in-between two original angles. In other words, the prediction direction in JEM has twice the angle resolution of HEVC. The higher number of prediction modes has been proposed to exploit the possibility of finer angular structures with proposed larger block sizes.

For an inter CU in HEVC, the corresponding coding block is further partitioned into one or more prediction blocks. Inter prediction is performed on the PB level, and the corresponding PU contains the information about how inter prediction is performed. The motion information (e.g., motion vector and reference picture index) can be signaled in two methods, namely, "merge mode" and "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The transforms are generally based on separable transforms. For instance, a DCT transform is first applied in the horizontal direction, then in the vertical direction. For HEVC, transform block sizes of $4 \times 4$, $8 \times 8$, $16 \times 16$, and $32 \times 32$ are supported. The elements of the core transform matrices were derived by approximating scaled discrete cosine transform (DCT) basis functions. The HEVC transforms are designed under considerations such as limiting the dynamic range for transform computation and maximizing the precision and closeness to orthogonality when the matrix entries are specified as integer values. For simplicity, only one integer matrix for the length of 32 points is specified, and subsampled versions are used for other sizes. For the transform block size of $4 \times 4$, an alternative integer transform derived from a discrete sine transform (DST) is applied to the luma residual blocks for intra prediction modes.

In JEM, the transforms used in both directions may differ (e.g., DCT in one direction, DST in the other one), which leads to a wide variety of 2D transforms, while in previous codecs, the variety of 2D transforms for a given block size is usually limited.

The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an exemplary video decoder 200, such as an HEVC decoder. In the exemplary decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a JEM decoder.

In particular, the input of the decoder includes a video bitstream, which may be generated by video encoder 100. The bitstream is first entropy decoded (230) to obtain transform coefficients, motion vectors, picture partitioning information, and other coded information. For HEVC, the picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. For JEM, the decoder may divide the picture based on the partitioning information indicating the QTBT structure. The transform coefficients are de-quantized (240) and inverse transformed (250) to decode the prediction residuals.

Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

As described above, the prediction residuals are transformed and quantized. For the transformation of the prediction residuals, considering an MxN (M columns x N rows) residual block ($[U]_{MxN}$) that is input to a 2D MxN forward transform, the 2D transform is typically implemented by applying an N-point 1D transform to each column (i.e., vertical transform) and an M-point ID transform to each row (i.e., horizontal transform) separately, as illustrated in FIG. 4. Mathematically, the forward transform can be expressed as:

$$[C]_{MxN} = [A]^T_{NxN} \, x \, [U]_{MxN} \, x \, [B]_{MxM}$$

where $[A]_{NxN}$ is the N-point transform matrix applied vertically, and $[B]_{MxM}$ the M-point transform matrix applied horizontally, and "T" (superscript) is the matrix transposition operator. Thus, the separable transform consists in applying the horizontal and vertical transforms successively on each row and each column of the 2D prediction residual block. The inverse 2D MxN transform is thus expressed as follows:

$$[U]_{MxN} = [A^{-1}]^T_{NxN} \, x \, [C]_{MxN} \, x \, [B^{-1}]_{MxM}$$

For orthogonal transforms A and B, $[A^{-1}] = [A]^T$, and $[B^{-1}] = [B]^T$. Thus, the inverse transform can also be written as:

$$[U]_{MxN} = [A]_{NxN} \, x \, [C]_{MxN} \, x \, [B]^T_{MxM}$$

Some video codecs, such as those conforming to HEVC when processing certain block sizes, are based on 2D separable transforms using the same vertical and horizontal ID transforms. In the case of HEVC, DCT-II is used as the core transform. DCT-II transform is employed as a core transform mainly due to its ability to approximate Karhunen Loeve Transform (KLT) for highly correlated data. In addition, DCT-II is based on mirror extension of the discrete Fourier transform that has a fast implementation (known as Fast Fourier Transform or FFT). This property enables fast implementation of DCT-II, which is desired for both the hardware and software design.

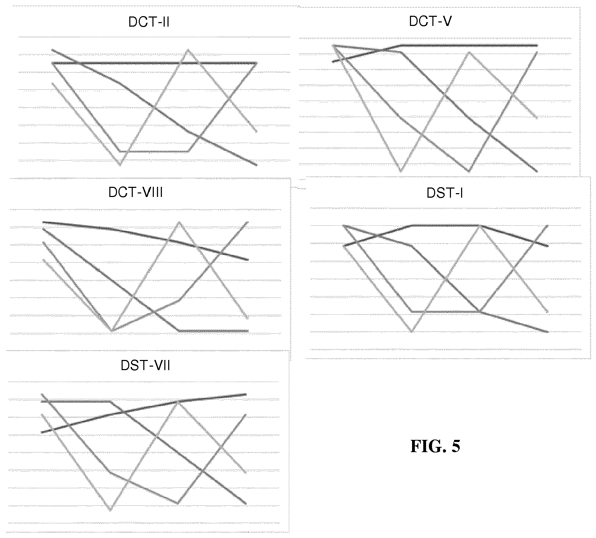

However, in the current JEM, five different horizontal/vertical transforms are defined, derived from five transforms as shown in Table 1 and illustrated for 4x4 size in FIG. 5. Flags are used at the CU level, for sizes from 4x4 to 64x64, to control the combination of transforms. When the CU level flag is equal to 0, DCT-II is applied as the horizontal and vertical transforms. When the CU level flag is equal to 1, two additional syntax elements are signalled to identify which one(s) of DCT-V, DCT-VIII, DST-I and DST-VII are to be used for the horizontal and vertical transforms. Note that other horizontal/vertical transforms could also be considered, such as the identity transform (which corresponds to skipping the transform in one direction).

**Table 1. Transform basis functions of DCT-II/V/VIII and DST-I/VII for N-point input in JEM.**

| Transform Type | Basis function $T_i(j)$, $i$, $j$=0, 1, ..., $N$-1 |
|---|---|
| DCT-II | $T_i(j) = \omega_0 \cdot \sqrt{\frac{2}{N}} \cdot \cos\left(\frac{\pi \cdot i \cdot (2j+1)}{2N}\right)$, where $\omega_0 = \begin{cases} \sqrt{\frac{2}{N}} & i = 0 \\ 1 & i \neq 0 \end{cases}$ |
| DCT-V | $T_i(j) = \omega_0 \cdot \omega_1 \cdot \sqrt{\frac{2}{2N-1}} \cdot \cos\left(\frac{2\pi \cdot i \cdot j}{2N-1}\right)$, where $\omega_0 = \begin{cases} \sqrt{\frac{2}{N}} & i = 0 \\ 1 & i \neq 0 \end{cases}$, $\omega_1 = \begin{cases} \sqrt{\frac{2}{N}} & j = 0 \\ 1 & j \neq 0 \end{cases}$ |
| DCT-VIII | $T_i(j) = \sqrt{\frac{4}{2N+1}} \cdot \cos\left(\frac{\pi \cdot (2i+1) \cdot (2j+1)}{4N+2}\right)$ |
| DST-I | $T_i(j) = \sqrt{\frac{2}{N+1}} \cdot \sin\left(\frac{\pi \cdot (i+1) \cdot (j+1)}{N+1}\right)$ |
| DST-VII | $T_i(j) = \sqrt{\frac{4}{2N+1}} \cdot \sin\left(\frac{\pi \cdot (2i+1) \cdot (j+1)}{2N+1}\right)$ |

For the intra case, the set of possible transforms depends on the intra mode. Three sets are defined as follows:

- Set 0: DST-VII, DCT-VIII
- Set 1: DST-VII, DST-I
- Set 2: DST-VII, DCT-V

For each intra mode and each transform direction (horizontal/vertical), one of these three sets is enabled. For each of the horizontal and vertical transform, one of the two transform candidates in the identified transform subset, is selected based on explicitly signalled flags. For the inter case, only DST-VII and DCT-VIII are enabled, and the same transform is applied for both horizontal and vertical transforms.

The support for these multiple transforms in JEM implies that a JEM codec needs to store in memory the coefficients of the 2D matrices, which are needed to perform the considered forward and inverse 2D separable transforms. This occupies a significant amount of memory. Accordingly, the present arrangements propose to use a chosen set of multiple transforms with a reduced amount of memory requirement and reduced complexity for hardware implementation, compared to the prior and existing codecs. In the meantime, the coding efficiency of such proposed transform set with the reduced memory requirement should provide at least similar performance as the prior art solutions in terms of compression efficiency.

In the following, some arrangements are described mainly with respect to intra-predicted blocks, but the techniques may also be applied to inter-predicted blocks.

As used herein, regular numbers are used interchangeably with roman numerals for brevity. Therefore, for example, DCT-II, DCT-V, DCT-VIII, DST-I, DST-IV and DST-VII are also referred respectively as DCT2, DCT5, DCT8, DST1, DST4 and DST7.

In one embodiment, a smaller set of transforms is used for horizontal or vertical transforms compared to the prior art solutions, while keeping the same number of transform pairs that may be used or selected in the coding and decoding of a residual block. Here we use the "transform pair" to refer to a pair of horizontal transform and vertical transform, which in combination perform the 2D separable transform. Thus, the number of 2D separable transforms that may be used or selected for a block is the same as before, while the transform pair is constructed based on a smaller set of multiple transforms compared to the prior art. Again, the smaller set is chosen to provide at least similar performance as the prior art solutions in terms of compression efficiency but with the reduced memory requirement. The set of transforms is designed such that the set is as small as possible, and is able to catch the statistics of a residual block, which may have one or more of the following properties:

- The energy of the residual signal is monotonically increasing according to spatial location inside the considered block. This is typical the case for intra-predicted blocks, where the prediction error is statistically low on the border of the block which is close to the causal reference samples of the block, and increases as a function of the distance between the predicted samples and the block boundary.
- The energy of the residual signal is monotonically decreasing according to spatial location inside the considered block. This also happens for some intra predicted blocks.
- A general case where the energy of the prediction error is uniformly distributed over the block. This is the most frequent case, in particular for inter-predicted blocks.

According to one embodiment, DCT5 and DST1 transforms are removed from the set of horizontal/vertical transforms supported by the JEM codec. This is based on the observation that DCT5 is very similar to the DCT2 core transform, thus DCT5 does not bring an increased variety in the types of texture blocks that the set of transforms is able to efficiently process in terms of energy compaction. Moreover, from experimental studies it is observed that using the DST1 transform brings a very small improvement in terms of compression efficiency. Thus, DST1 is removed from the codec design in this embodiment. Finally, according to another non-limiting embodiment, the proposed solution may introduce the use of DST4 transform as an additional transform to the reduced set of the transforms.

Accordingly, the proposed smaller set of the multiple transforms which may be used or selected for the present arrangements may consist only of: DCT-II, DST-VII, and DCT-VIII. In another exemplary arrangement, the reduced set may additionally consist of DST-IV. The mathematical basis function for the DST-IV transform is shown in Table 2, and the mathematical basis functions for the other above-mentioned transforms have already been shown in Table 1.

**Table 2. Transform basis function for DST-IV**

| DST-IV | $T_i(j) = \sqrt{\dfrac{2}{N}} \cdot \sin\left(\dfrac{\pi \cdot (2i+1) \cdot (2j+1)}{4N}\right))$ |
|---|---|

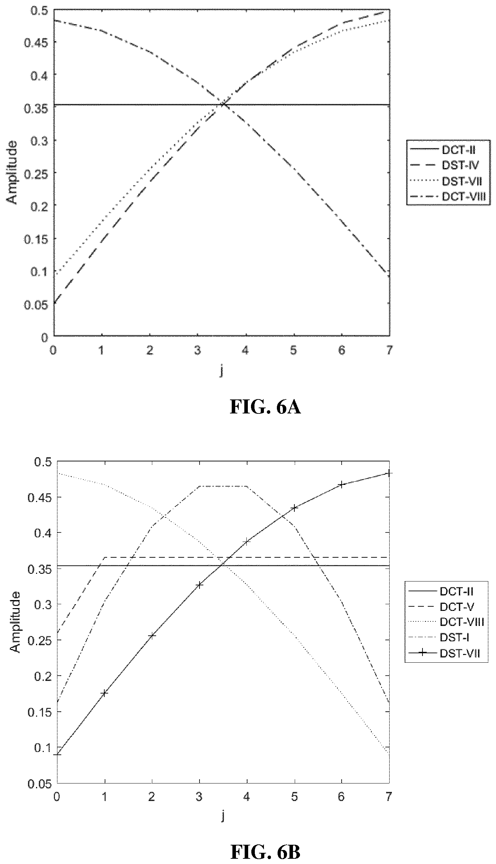

FIG. 6A shows a graph that plots on the y-axis the amplitude of the first basis functions (i.e., i=0), and on the x-axis the index j for DCT-II, DST-IV, DST-VII and DCT-VIII. The first basis function (i=0) represents basis function of the considered transform at the lowest frequency. Accordingly, as can be seen from the graph in FIG. 6A, DCT-II is a transform with a constant lowest frequency basis function, DST-VII and DST-IV are transforms with an increasing lowest frequency basis function, and DCT-VIII is a transform with a decreasing lowest frequency basis function. FIG. 6B shows the transform basis functions for the JVET transforms at the lowest frequency.

Some of the reasons for selecting these transforms for the smaller set are summarized below:

- DST-VII has been shown to be the KLT for the intra predicted blocks in the direction of prediction.
- The lowest frequency basis function for DST-IV is similar to DST-VII (see e.g., FIG. 6A). DST-VII is also derived from the mirror extension of FFT, with different length of FFT basis functions and shift in frequency. Nevertheless, DST-IV brings a small variation to DST-VII, which enables a codec to better manage the residual signal varieties. Accordingly, DST-IV transform provides an extra flexibility to deal with other data which may not be covered by DST-VII.
- DCT-VIII basis functions may deal with residual signals that are decaying upside-down or right-side left. Therefore, DCT-VIII provides more flexibility not covered by both DST-VII and DST-IV. That is, the lowest frequency basis function of DST-VII and of DST-IV has increasing values while the lowest frequency basis function of DCT-VIII has decreasing values.
- DCT-II is also provided in the smaller set as it is generally a good de-correlating transform.

Note that some of the selected transform matrices are symmetric and thus self-inverse, that is, for an orthonormal transform matrix A, the following equalities hold:

$$A^{-1} = A^T, \; AA^T = I$$

where $I$ is the identity matrix and $T$ is the transpose operator. If $A$ is symmetric, then $A = A^T = A^{-1}$. This means that the inverse transform can be computed by using forward transform matrix, and no extra matrix for inverse transform needs to be stored.

Both DCT-VIII and DST-IV are self-inverse, whereas only DST-VII is not. Therefore, the support for the DST-VII needs to store 2 transform matrices (one for forward transform, and one for inverse transform), whereas for DCT-VII and DST-IV, only one single matrix needs to be stored. This is in comparison to the selected JVET set (see Table 3), where 3 out of 4 transforms are self-inverse.

**Table 3. Adaptive multiple transforms in JVET (in addition to DCT-II). Transforms in bold are self-inverse**

| JVET transform sets | **DCT-V, DCT-VIII, DST-I, DST-VII** |
|---|---|

Table 4 summarizes the number of required transform matrices, or the number of hardware architectures (in addition to DCT-II) needed to enable the proposed method, in comparison with JVET approach.

**Table 4. A comparison between the number of required additional transform matrices/hardware architectures in the proposed and JVET approaches**

| Transform Type (proposed) | Number of matrices or hardware architecture | Transform Type (JVET) | Number of matrices or hardware architectures |
|---|---|---|---|
| DST-VII | 2 | DST-VII | 2 |
| DST-IV | 1 | DCT-VIII | 1 |
| DCT-VIII | 1 | DST-I | 1 |
|  |  | DCT-V | 1 |
| **Sum** | **4** | **Sum** | **5** |

The proposed approach requires 20% (1 - 4/5) less storage for additional transforms. For instance, the allowed transform block size is from 4x4 to 128x128. This necessitates loading 21840 elements of transform matrices for each type of transform (Table 5). For 2 bytes representation, this requires about 43.68 Kbytes (=2*21840) for each transform. Thus, in a high complexity embodiment, where 3 additional transforms (e.g., DST-VII, DST-IV, and DCT-VIII) in addition to DCT-II are used, the required memory for all the forward transforms is about 174.72 (43.68*4) Kbytes. In a low complexity embodiment, where 2 additional transforms (e.g., DST-VII and DCT-VIII) in addition to DCT-II is used, this is reduced to 131.04 Kbytes (43.68*3). When compared to JVET, both numbers are much smaller, since 218.40 (43.68*5) Kbytes are required in JVET.

**Table 5. Number of transform matrices elements needed for different transform block sizes**

| Transform block size | Number of transform matrix elements |
|---|---|
| 4x4 | 16 |
| 8x8 | 64 |
| 16x16 | 256 |
| 32x32 | 1024 |
| 64x64 | 4096 |
| 128x128 | 16384 |
| **Sum** | **21840** |

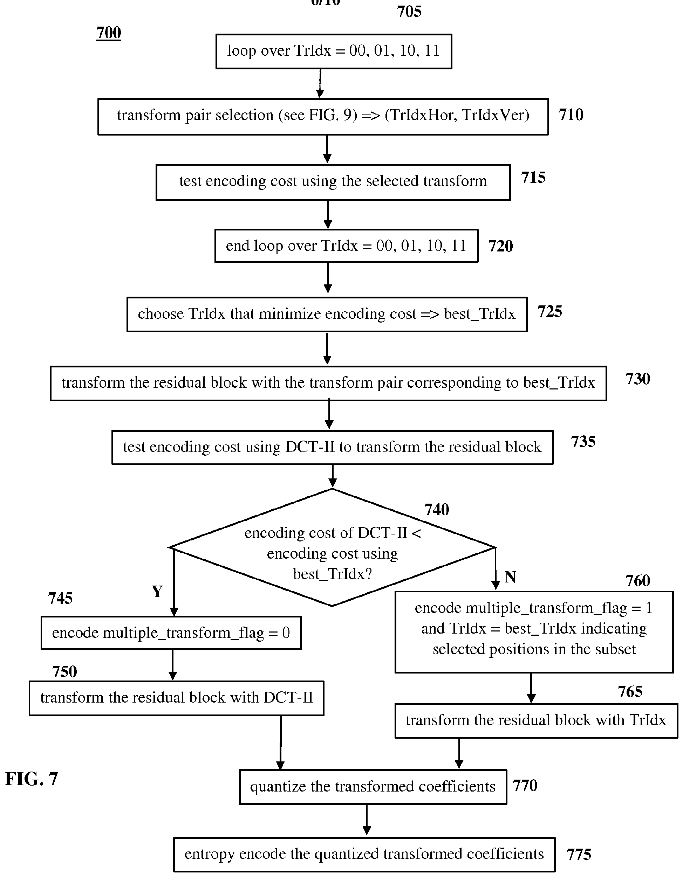

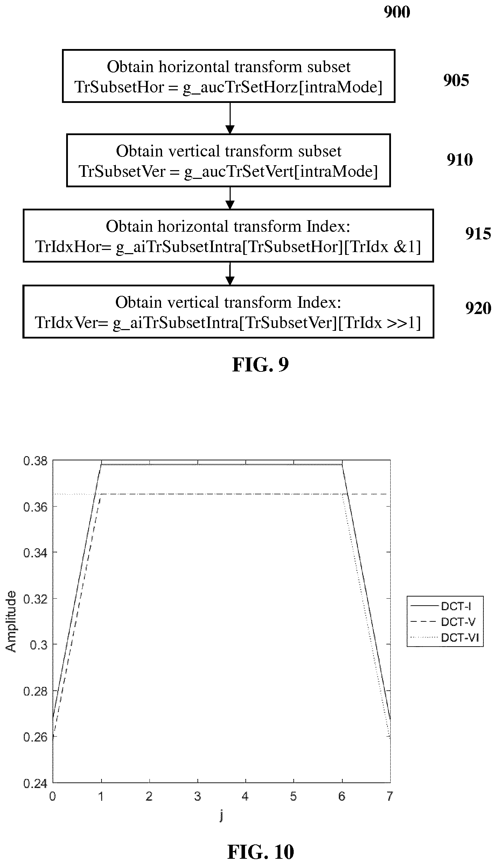

FIG. 7 illustrates an exemplary encoding process 700 for rate distortion (RD) optimized choice of a transform pair for a given block. At steps 705-720 of FIG. 7, the process 700 is in an iteration loop over all of the values of a transform index TrIdx. The index TrIdx is a two-bit index which takes on the values of 00, 01, 10 and 11. In one exemplary arrangement, one of the two bits (e.g., the least significant bit) may indicate which transform in a subset of the set of the transforms is used for horizontal transform, and the other bit (e.g., the most significant bit) may indicate which transform in a subset of the set of the transforms is used for vertical transform, as to be described in more detail below in connection with FIG. 9.

At step 710 of FIG. 7, a transform pair is chosen from the set of the multiple transforms as to be described in detail in connection with FIG. 9 below. At step 715, encoding cost is tested for each chosen transform pair, based on the value of TrIdx. The encoding cost can be the rate distortion cost ($D + \lambda R$) associated with the coding of the considered residual block using the horizontal and vertical transforms. Here $D$ is the distortion between the original and the reconstructed block, $R$ is the rate cost and $\lambda$ is the Lagrange parameter usually used in the computation of the rate distortion cost.

At step 725, based on the results of the encoding tests conducted at step 715 for each value of the TrIdx, the horizontal and vertical transform pair corresponding to the value of TrIdx that minimizes the encoding cost is chosen and this index is set to best_TrIdx. That is, the best index best_TrIdx points to the best horizontal and vertical transform pair to use. At step 730, the prediction residuals of the current block being encoded are transformed using the best horizontal and vertical transform pair.

At step 735 of FIG. 7, the encoding cost using the transform DCT-II is determined. At step 740, this encoding cost using the transform DCT-II is then compared with the encoding cost of the best horizontal and vertical transform pair determined above at steps 705-735. At step 745, if the result of the comparison at step 740 is such that the encoding cost of using DCT-II transforms is lower than the transform choices indicated by best_TrIdx, then the transform DCT-II is used to transform the prediction residuals of the current block both horizontally and vertically at step 750. In one exemplary arrangement, a syntax element multiple_transform_flag is set to 0, and is encoded into the output bitstream to indicate that only transform DCT-II is used.

If on the other hand, the result of the comparison at step 740 is such that the encoding cost of using DCT-II transform is not lower than the transform pair indicated by best_TrIdx, then the transform choices indicated by best_TrIdx are used to transform the prediction residuals of the current block at step 765. In addition, at step 760 of FIG. 7, the syntax element multiple_transform_flag is set to 1 and is encoded into the output bitstream to indicate that the set of the multiple transforms is used. Furthermore, the syntax element TrIdx is set to best_TrIdx and is encoded and transmitted in a bitstream for use by a decoder or decoding process, also at step 760.

At step 770 of FIG. 7, the transformed coefficients are quantized. At step 775 of FIG. 7, the quantized transformed coefficients are further entropy encoded.

In the example shown in FIG. 7 and just described above, DCT-II is used as a core transform similar to that in JEM. In addition, transform DCT-II is considered as a main transform and is considered separately in the encoding cost evaluations for choosing the best transforms to be used, as shown, e.g., at steps 730 and 735 of FIG. 7. That is, a set of multiple transforms are first evaluated among themselves such as shown, e.g., at steps 705-730 of FIG. 7 to obtain the best horizontal and vertical transform pair from among this set of multiple transforms, then this best transform pair will be further tested against the core transform DCT-II, as shown at steps 735 and 740 of FIG. 7. In an exemplary embodiment, this set of multiple transforms to be tested may consist only of DST-VII and DCT-VIII for a low complexity implementation. In another exemplary embodiment, this set of multiple transforms may consist only of DST-IV, DST-VII and DCT-VIII for a high complexity implementation. In yet another exemplary embodiment, DCT-II transform may be treated exactly the same way as other transforms. Therefore, in this case, the two-level testing shown in FIG. 7 is not needed (e.g., steps 735-750 may be eliminated and DCT-II becomes a part of the set of multiple transforms to be tested at steps 705-730). Similar exemplary arrangements of having a main transform, which is signaled by a dedicated "multiple_transform_flag" syntax element, or not may also be made on the decoder/decoding side.

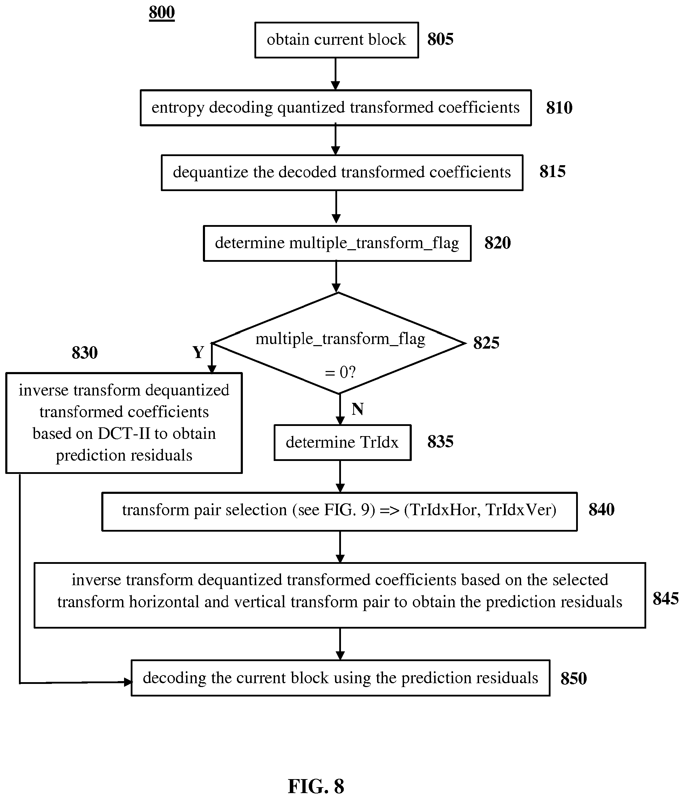

FIG. 8 shows an exemplary decoding process 800 to parse and retrieve the horizontal and vertical transform pair used for a given block being decoded. The decoding process 800 corresponds to and performs in general the inverse functions of the encoding process 700 as shown in FIG. 7.

At step 805 of FIG. 8, data for the current block of a video picture to be decoded is obtained from an encoded bitstream provided by e.g., an encoding process 700 shown in FIG. 7. At step 810, the method 800 entropy decodes the quantized transformed coefficients of the current block. At step 815, the method 800 de-quantizes the decoded transformed coefficients. At step 820, the method 800 determines the value of the syntax element multiple_transform_flag obtained from the bitstream. This syntax element is decoded from the bitstream. According to the coding/decoding system considered, this multiple_transform_flag syntax element decoding steps may take place before the entropy decoding of quantized transformed coefficients (step 810). At step 825, if the value of multiple_transform_flag is 0 indicating that the core transform DCT-II has been used in the encoding process 700 of FIG. 7, then the method 800 inverse transforms the de-quantized transformed coefficients using the DCT-II for horizontal and vertical transforms to obtain the prediction residuals at step 830.

If, on the other hand, at step 825, the multiple_transform_flag is not 0 (i.e., is 1) indicating that the transform pair is selected from the set of multiple transforms in the encoding process 700 of FIG. 7, then the decoding method 800 additionally determines the value of transform index TrIdx as part of the syntax elements sent in the bitstream. The value TrIdx is entropy decoded from the input bitstream. The index of the horizontal transform (TrIdxHor) and vertical transform (TrIdxVer) used for the considered residual block are derived from TrIdx according to the process of FIG. 9. Based on the value of TrIdxHor and TrIdxVer, the method 800 inversely transforms the de-quantized transformed coefficients using the inverse transforms corresponding to horizontal and vertical transform pair selected by the encoding process 700 from the set of multiple transforms to obtain the prediction residuals at step 845. At step 850, the method 800 decodes the current block, for example, by combining the predicted block and the prediction residuals.

As previously explained with reference to FIG. 7 and FIG. 8 above, the value of the transform index TrIdx, is chosen by the encoding process 700, transmitted in the bit-stream, and parsed by the decoding process 800. Given the TrIdx value, a derivation process 900 shown in FIG. 9, performed the same way in both the encoder and the decoder, determines the pair of horizontal and vertical transforms used for the considered block.

The following exemplary arrangements will be described using Intra coded blocks. According to a non-limiting example, the exemplary transform pair derivation process 900 of FIG. 9 depends on the TrIdx value and on the intra prediction mode. As shown in FIG. 9, the input to the process 900 are several elements as described below.

- TrIdx is the two-bit syntax element that signals the horizontal and vertical transform pair, wherein one bit signals a horizontal transform index equaling to 0 or 1, and the other bit signals a vertical transform index equaling to 0 or 1.
- IntraMode is the intra prediction mode syntax element associated with the considered block such as shown e.g., in FIG. 3A or FIG. 3B.
- g_aucTrSetHorz is a data structure such as a look-up table that identifies a subset of transforms in the horizontal direction, indexed by the intra prediction mode IntraMode. As mentioned before, for example, 67 angular prediction modes are supported in JEM as shown in FIG. 3B. Therefore, for JEM, g_aucTrSetHorz comprises 67 elements as shown below: g_aucTrSetHorz[NUM_INTRA_MODE-1] ={2, 1, 0, 1, 0, 1, 0, 1, 0, 1, 0, 1, 0, 1, 2, 2, 2, 2, 2, 2, 2, 2, 2, 1, 0, 1, 0, 1, 0, 1, 0, 1, 0, 1, 0, 1, 0, 1, 0, 1, 0, 1, 0, 1, 0, 0, 0, 0, 0, 0, 0, 0, 1, 0, 1, 0, 1, 0, 1, 0, 1, 0}.
- Similarly, g_aucTrSetVert is also a data structure such as a look-up table that identifies a subset of transforms in the vertical direction, indexed by the intra prediction mode. As mentioned before, for example, 67 angular prediction modes are supported in JEM as shown in FIG. 3B. Therefore, for JEM, g_aucTrSetVert comprises 67 elements as shown below: g_aucTrSetVert[NUM_INTRA_MODE-1] ={2, 1, 0, 1, 0, 1, 0, 1, 0, 1, 0, 1, 0, 0, 0, 0, 0, 0, 0, 0, 0, 1, 0, 1, 0, 1, 0, 1, 0, 1, 0, 1, 0, 1, 0, 1, 0, 1, 0, 1, 2, 2, 2, 2, 2, 2, 2, 2, 1, 0, 1, 0, 1, 0, 1, 0, 1,0}.

Each element of the 67 elements in g_aucTrSetHorz and the 67 elements in g_aucTrSetVert may take on a value 0, 1, or 2, as shown above. The value 0, 1 or 2 indicates one of the three subsets in the table g_aiTrSubsetIntra to be chosen for the encoding cost comparison. As shown below, g_aiTrSubsetIntra is a customized data structure such as a look-up table, based on a set of multiple transforms. In one exemplary arrangement, the exemplary g_aiTrSubsetIntra is customized and structured as follows:

g_aiTrSubsetIntra[3][2] = { {DST-VII, DCT-VIII}, {DST-VII, DCT-II}, {DCT-VIII, DST-VII} }. Note that in JVET, g_aiTrSubsetIntra is set to a different data structure:
g_aiTrSubsetIntra[3][2] = { {DST-VII, DCT-VIII}, {DST-VII, DST-I}, {DST-VII, DCT-V} }.

Therefore, as shown in the exemplary process 900 in FIG. 9, at step 905, a horizontal transform subset indicated by TrSubsetHor is obtained as a function of the intra prediction mode using g_aucTrSetHorz as described above. Similarly, at step 910, a vertical transform subset indicated by TrSubsetVert is obtained as a function of the intra prediction mode using g_aucTrSetVert also as described above. At step 915 of FIG. 9, the horizontal transform of the current block is determined as the transform, which is indexed by the horizontal transform subset and one of the 2 bits of TrIdx (e.g., the least significant bit), inside the 2D look-up table g_aiTrSubsetIntra. Similarly, at step 920 of FIG. 9, the vertical transform of current block is determined as the transform, which is indexed by the vertical transform subset and the other of the 2 bits of TrIdx (e.g., the most significant bit), inside the 2D look-up table g_aiTrSubsetIntra.

As stated previously, an objective of the present arrangements is to employ a minimal set of horizontal and vertical transforms. In one arrangement, three transforms which respectively have a lowest frequency basis function that is constant, increasing and decreasing are used. In accordance with another exemplary arrangement, this concept may be generalized, through various examples of alternative transforms which would still fulfill this or similar criteria.

Therefore, the selection of the three transforms which constitute the set of multiple transforms according to the present arrangements may be generalized to consist of three transforms which respectively have quasi-constant, quasi-increasing and quasi-decreasing basis functions at the lowest frequency. By quasi-constant, quasi-increasing and quasi-decreasing, we mean a basis function that is constant, increasing, and decreasing over the whole period apart from the boundaries.

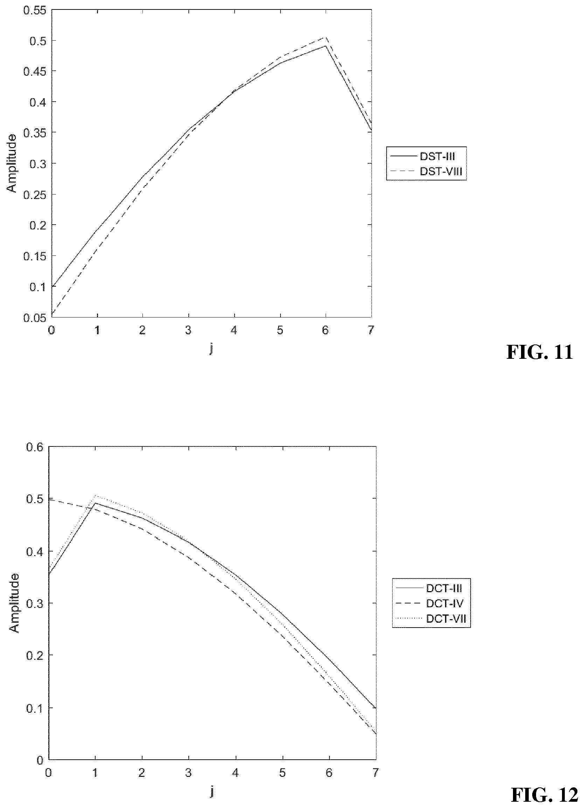

For instance, with respect to a transform having a quasi-constant lowest frequency basis function, some alternative choices to DCT-II transform may be, e.g., DCT-I, DCT-V, and DCT-VI transforms, as shown in FIG. 10. With respect to a transform having a quasi-increasing lowest frequency basis function such as DST-IV and DST-VII, some alternative choices may be, e.g., DST-III and DST-VIII transforms, as shown in FIG. 11. With respect to a transform having a quasi-decreasing lowest frequency basis function such as DCT-VIII, some alternative choices may be, e.g., DCT-III, DCT-IV and DCT-VII transforms, as shown in FIG. 12. The mathematical formula for the basis functions of the above mentioned alternative transforms are given in Table 6 below, where

$$\gamma_k = \begin{cases} \sqrt{\frac{1}{2}} & k = 0, N-1 \\ 1 & else \end{cases},$$

$$\delta_k = \begin{cases} \sqrt{\frac{1}{2}} & k = 0 \\ 1 & else \end{cases}, \quad \varepsilon_k = \begin{cases} \sqrt{\frac{1}{2}} & k = N-1 \\ 1 & else \end{cases}.$$

**Table 6. Transform basis functions for the alternative transforms**

| Transform Type | Basis function $T_i(j)$, $i, j=0, 1, ..., N-1$ |
|---|---|
| DCT-I | $T_i(j) = \gamma_i \cdot \gamma_j \cdot \sqrt{\dfrac{2}{N-1}} \cdot \cos\left(\dfrac{\pi \cdot i \cdot j}{N-1}\right)$ |
| DCT-V | $T_i(j) = \delta_i \cdot \delta_j \cdot \dfrac{2}{\sqrt{2N-1}} \cdot \cos\left(\dfrac{2\pi \cdot i \cdot j}{2N-1}\right)$ |
| DCT-VI | $T_i(j) = \delta_i \cdot \varepsilon_j \cdot \dfrac{2}{\sqrt{2N-1}} \cdot \cos\left(\dfrac{2\pi \cdot i \cdot (j+\frac{1}{2})}{2N-1}\right)$ |
| DST-III | $T_i(j) = \varepsilon_j \cdot \sqrt{\dfrac{2}{N}} \cdot \sin\left(\dfrac{\pi \cdot (i+\frac{1}{2}) \cdot (j+1)}{N}\right)$ |
| DST-VIII | $T_i(j) = \dfrac{2}{\sqrt{2N-1}} \cdot \varepsilon_i \cdot \varepsilon_j \cdot \sin\left(\dfrac{2\pi \cdot (i+\frac{1}{2}) \cdot (j+\frac{1}{2})}{2N-1}\right)$ |
| DCT-III | $T_i(j) = \delta_j \cdot \sqrt{\dfrac{2}{N}} \cdot \cos\left(\dfrac{\pi \cdot (i+\frac{1}{2}) \cdot j}{N}\right)$ |
| DCT-IV | $T_i(j) = \sqrt{\dfrac{2}{N}} \cdot \cos\left(\dfrac{\pi \cdot (i+\frac{1}{2}) \cdot (j+\frac{1}{2})}{N}\right)$ |
| DCT-VII | $T_i(j) = \varepsilon_i \cdot \delta_j \cdot \dfrac{2}{\sqrt{2N-1}} \cdot \cos\left(\dfrac{2\pi \cdot (i+\frac{1}{2}) \cdot j}{2N-1}\right)$ |

According to further exemplary embodiments of the present arrangements, the set of horizontal and vertical transforms to be applied may vary from a block size to another block size. For example, this may be advantageous to increase compression efficiency with regards to video having complex textures, in which the encoder chooses small blocks that contains some discontinuities. Indeed, having a discontinuous lowest frequency basis function for small blocks (e.g. 4xN, Nx4), with e.g., DCT-V transform, may be efficient in handling a residual block resulting from an intra prediction, where, in the considered horizontal direction/vertical direction, the prediction error is constant apart from the boundaries.

According to further exemplary embodiments of the present arrangements, the number of transforms in the chosen set of multiple transforms may vary from a block size to another block size. Typically, having a variety of transforms is helpful for small blocks, in particular with complex textures, and necessitates a reasonable memory size to be supported in the codec design. On the contrary, for large blocks (e.g. 32 or 64 in width or height), a reduced set of transforms may be enough. For example, since DST-IV and DST-VII behave similarly for sufficiently large blocks, only one of them may be included in the reduced set of multiple transforms.

According to further exemplary embodiments of the present arrangements, the following modified set of multiple transform subsets may be used as the g_aiTrSubsetIntra function as described above in connection with FIG. 9, according to a low-complexity embodiment:

g_aiTrSubsetIntra[3][2] = { {DST7, DCT8}, {DST7, DCT2}, {DCT8, DST7} }

Alternatively, according to a higher complexity approach, an exemplary arrangement uses DST4 transform in the g_aiTrSubsetIntra function as follows:

g_aiTrSubsetIntra[3][2] = { {DST7, DCT8}, {DST4, DCT2}, {DST7, DCT2} }

As shown above, the set of possible multiple transforms now includes DST4 transform in addition to DCT2, DCT8 and DST7 transforms.

Here three subsets of transforms are used, where each subset of transform includes two transform types. More generally, fewer or more subsets can be used, and each subset may include only one or more than two transform types. For instance, the low complexity embodiment can further be reduced to use g_aiTrSubsetIntra[2][2] = { {DST7, DCT8}, {DST7, DCT2} }.

In the above, which subset of transforms to be selected is based on the intra mode (implicit signaling), and which transform to be used in the subset is explicitly signalled. The present embodiments are not limited to this signaling method. Other methods for signaling which transform is used for horizontal or vertical transform can also be used.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of intra prediction modes (35, or 67), or the number of transform subsets (3). It should be noted that the specific values are for exemplary purposes and the present embodiments are not limited to these specific values.

In the above, various embodiments are described with respect to HEVC, or JEM. For example, various methods for designing the set of transforms can be used to modify the transform module (125) and the inverse transform module (250) of the JEM or HEVC encoder and decoder as shown in FIG. 1 and FIG. 3. However, the present embodiments are not limited to JEM or HEVC, and can be applied to other standards, recommendations, and extensions thereof.

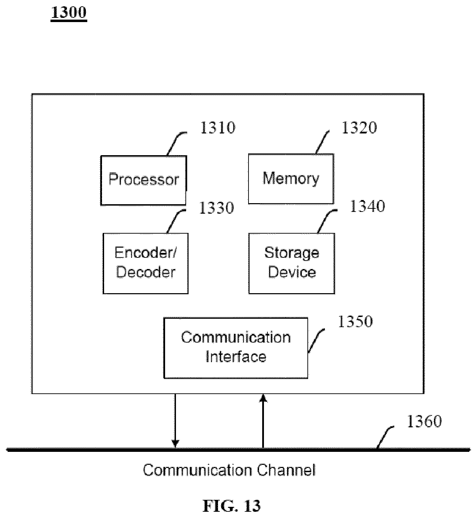

FIG. 13 illustrates a block diagram of an exemplary system 1300 in which various aspects of the exemplary embodiments may be implemented. The system 1300 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. The system 1300 may be communicatively coupled to other similar systems, and to a display via a communication channel as shown in FIG. 13 and as known by those skilled in the art to implement all or part of the exemplary video systems described above.

Various embodiments of the system 1300 include at least one processor 1310 configured to execute instructions loaded therein for implementing the various processes as discussed above. The processor 1310 may include embedded memory, input output interface, and various other circuitries as known in the art. The system 1300 may also include at least one memory 1320 (e.g., a volatile memory device, a non-volatile memory device). The system 1300 may additionally include a storage device 1340, which may include non-volatile memory, including, but not limited to, EEPROM, ROM, PROM, RAM, DRAM, SRAM, flash, magnetic disk drive, and/or optical disk drive. The storage device 1340 may comprise an internal storage device, an attached storage device, and/or a network accessible storage device, as non-limiting examples. The system 1300 may also include an encoder/decoder module 1330 configured to process data to provide encoded video and/or decoded video, and the encoder/decoder module 1330 may include its own processor and memory.

The encoder/decoder module 1330 represents the module(s) that may be included in a device to perform the encoding and/or decoding functions. As is known, such a device may include one or both of the encoding and decoding modules. Additionally, the encoder/decoder module 1330 may be implemented as a separate element of the system 1300 or may be incorporated within one or more processors 1310 as a combination of hardware and software as known to those skilled in the art.

Program code to be loaded onto one or more processors 1310 to perform the various processes described hereinabove may be stored in the storage device 1340 and subsequently loaded onto the memory 1320 for execution by the processors 1310. In accordance with the exemplary embodiments, one or more of the processor(s) 1310, the memory 1320, the storage device 1340, and the encoder/decoder module 1330 may store one or more of the various items during the performance of the processes discussed herein above, including, but not limited to the input video, the decoded video, the bitstream, equations, formulas, matrices, variables, operations, and operational logic.

The system 1300 may also include a communication interface 1350 that enables communication with other devices via a communication channel 1360. The communication interface 1350 may include, but is not limited to a transceiver configured to transmit and receive data from the communication channel 1360. The communication interface 1350 may include, but is not limited to, a modem or network card and the communication channel 1350 may be implemented within a wired and/or wireless medium. The various components of the system 1300 may be connected or communicatively coupled together (not shown in FIG. 13) using various suitable connections, including, but not limited to internal buses, wires, and printed circuit boards.

The exemplary embodiments may be carried out by computer software implemented by the processor 1310 or by hardware, or by a combination of hardware and software. As a non-limiting example, the exemplary embodiments may be implemented by one or more integrated circuits. The memory 1320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1310 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method for video encoding, comprising:

    selecting (725) a horizontal transform and a vertical transform from a set of transforms to transform prediction residuals of a current block of a video picture being encoded, wherein the set of transforms includes: 1) only one transform with a constant lowest frequency basis function, 2) one or more transforms with an increasing lowest frequency basis function, and 3) only one transform with a decreasing lowest frequency basis function;
    providing (760) at least a syntax element indicting the selected horizontal and vertical transforms;
    transforming (765) the prediction residuals of the current block using the selected horizontal and vertical transforms to obtain transformed coefficients for the current block; and
    encoding (775) the syntax element and the transformed coefficients of the current block.

2.  A method for video decoding, comprising:

    obtaining (835) at least a syntax element indicting a horizontal transform and a vertical transform;
    selecting (840), based on the syntax element, the horizontal and vertical transforms from a set of transforms to inversely transform transformed coefficients of a current block of a video picture being decoded, wherein the set of transforms includes: 1) only one transform with a constant lowest frequency basis function, 2) one or more transforms with an increasing lowest frequency basis function, and 3) only one transform with a decreasing lowest frequency basis function;
    inversely transforming (845) the transformed coefficients of the current block using the selected horizontal and vertical transforms to obtain prediction residuals for the current block; and
    decoding (850) the current block using the prediction residuals.

3.  An apparatus for video encoding, comprising at least a memory and one or more processors, wherein said one or more processors are configured to:

    select a horizontal transform and a vertical transform from a set of transforms to transform prediction residuals of a current block of a video picture being encoded, wherein the set of transforms includes: 1) only one transform with a constant lowest frequency basis function, 2) one or more transforms with an increasing lowest frequency basis function, and 3) only one transform with a decreasing lowest frequency basis function;
    provide at least a syntax element indicting the selected horizontal and vertical transforms;
    transform the prediction residuals of the current block using the selected horizontal and vertical transforms to obtain transformed coefficients for the current block; and
    encode the syntax element and the transformed coefficients of the current block.

4.  An apparatus for video decoding, comprising at least a memory and one or more processors, wherein said one or more processors are configured to:

    obtain at least a syntax element indicting a horizontal transform and a vertical transform;
    select, based on the syntax element, the horizontal and vertical transforms from a set of transforms to inversely transform transformed coefficients of a current block of a video picture being decoded, wherein the set of transforms includes: 1) only one transform with a constant lowest frequency basis function, 2) one or more transforms with an increasing lowest frequency basis function, and 3) only one transform with a decreasing lowest frequency basis function;
    inversely transform the transformed coefficients of the current block using the selected horizontal and vertical transforms to obtain prediction residuals for the current block; and
    decode the current block using the prediction residuals.

5.  The method of claim 1 or 2, or the apparatus of claim 3 or 4, wherein the syntax element comprising an index indicating which transform in a subset of a plurality of subsets, to use for the selected horizontal or vertical transform.

6.  The method of any one of claims 1, 2 and 5, or the apparatus of any one of claims 3-5, wherein the transform with a constant lowest frequency basis function is DCT-II, the transform with an increasing lowest frequency basis function is DST-VII, and the transform with a decreasing lowest frequency basis function is DCT-VIII.

7.  The method of any one of claims 1, 2, 5 and 6, or the apparatus of any one of claims 3-6, wherein the set of the transforms additionally includes another transform with a decreasing lowest frequency basis function.

8. The method of any one of claim 7, or the apparatus of any one of claim7, wherein the another transform with a decreasing lowest frequency basis function is DST-IV.

9. The method of any one of claims 1, 2 and 5-8, or the apparatus of any one of claims 3-8, wherein the selection of the horizontal and vertical transforms depends on a block size of the current block.

10. The method of any one of claims 1, 2 and 5-9, or the apparatus of any one of claims 3-9, wherein number in the set of transforms depends on a block size.

11. The method of any one of claims 5-10, or the apparatus of any one of claims 5-10, wherein the plurality of subsets are: {DST-VII, DCT-VIII}, {DST-VII, DCT-II}, and {DCT-VIII, DST-VII}.

12. The method of any one of claims 5-11, or the apparatus of any one of claims 5-11, wherein the plurality of subsets are: {DST-VII, DCT-VIII}, {DST-IV, DCT-II}, and {DST-VII, DCT-II}.

13. A bitstream, wherein the bitstream is formed by:

    selecting a horizontal transform and a vertical transform from a set of transforms to transform prediction residuals of a current block of a video picture being encoded, wherein the set of the plurality of transforms includes: 1) only one transform with a constant lowest frequency basis function, 2) one or more transforms with an increasing lowest frequency basis function, and 3) only one transform with a decreasing lowest frequency basis function;
    providing at least a syntax element indicting the selected horizontal and vertical transforms;
    transforming the prediction residuals of the current block using the selected horizontal and vertical transforms to obtain transformed coefficients for the current block; and
    encoding the syntax element and the transformed coefficients of the current block.

14. A non-transitory computer readable medium containing data content generated according to the method of any one of claims 1, 2 and 5-12, or the apparatus of any one of claims 3-12.

15. A computer program product comprising instructions for performing the method of any one of claims 1, 2 and 5-12 when executed by one of more processors.

**FIG. 1**

**FIG. 2**

**FIG. 3A**

**FIG. 3B**

**FIG. 4**

DCT-II

DCT-V

DCT-VIII

DST-I

DST-VII

**FIG. 5**

**FIG. 6A**

**FIG. 6B**

**700**

**705**

loop over TrIdx = 00, 01, 10, 11

transform pair selection (see FIG. 9) => (TrIdxHor, TrIdxVer) **710**

test encoding cost using the selected transform **715**

end loop over TrIdx = 00, 01, 10, 11 **720**

choose TrIdx that minimize encoding cost => best_TrIdx **725**

transform the residual block with the transform pair corresponding to best_TrIdx **730**

test encoding cost using DCT-II to transform the residual block **735**

**740**

encoding cost of DCT-II <
encoding cost using
best_TrIdx?

**745** **Y**

**N** **760**

encode multiple_transform_flag = 0

encode multiple_transform_flag = 1
and TrIdx = best_TrIdx indicating
selected positions in the subset

**750**

transform the residual block with DCT-II

**765**

transform the residual block with TrIdx

**FIG. 7**

quantize the transformed coefficients **770**

entropy encode the quantized transformed coefficients **775**

**800**

obtain current block    **805**

entropy decoding quantized transformed coefficients    **810**

dequantize the decoded transformed coefficients    **815**

determine multiple_transform_flag    **820**

multiple_transform_flag = 0?    **825**

**830**    **Y**

inverse transform dequantized
transformed coefficients
based on DCT-II to obtain
prediction residuals

**N**

determine TrIdx    **835**

transform pair selection (see FIG. 9) => (TrIdxHor, TrIdxVer)    **840**

inverse transform dequantized transformed coefficients based on the selected
transform horizontal and vertical transform pair to obtain the prediction residuals    **845**

decoding the current block using the prediction residuals    **850**

**FIG. 8**

900

```
┌─────────────────────────────────────────────────┐
│        Obtain horizontal transform subset         │        905
│   TrSubsetHor = g_aucTrSetHorz[intraMode]         │
└─────────────────────────────────────────────────┘
                        ↓
┌─────────────────────────────────────────────────┐
│         Obtain vertical transform subset          │        910
│    TrSubsetVer = g_aucTrSetVert[intraMode]        │
└─────────────────────────────────────────────────┘
                        ↓
┌─────────────────────────────────────────────────┐
│         Obtain horizontal transform Index:        │        915
│  TrIdxHor= g_aiTrSubsetIntra[TrSubsetHor][TrIdx &1]│
└─────────────────────────────────────────────────┘
                        ↓
┌─────────────────────────────────────────────────┐
│          Obtain vertical transform Index:         │        920
│  TrIdxVer= g_aiTrSubsetIntra[TrSubsetVer][TrIdx >>1]│
└─────────────────────────────────────────────────┘
```

**FIG. 9**

**FIG. 10**

FIG. 11

FIG. 12

1300

FIG. 13

Europäisches
Patentamt

European
Patent Office

Office européen
des brevets

# EUROPEAN SEARCH REPORT

Application Number

EP 17 30 6894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/219290 A1 (ZHAO XIN [US] ET AL) 28 July 2016 (2016-07-28) | 1-7,9, 10,13-15 | INV. H04N19/176 |
| Y | * paragraphs [0223], [0237] - [0245], [0257] - [0272], [0293] * | 8,11,12 | H04N19/61 H04N19/12 H04N19/122 |
| Y | PHILIPPE (ORANGE) P ET AL: "Proposed improvements to the Adaptive multiple Core transform", 3. JVET MEETING; 26-5-2016 - 1-6-2016; GENEVA; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-C0022-v4, 27 May 2016 (2016-05-27), XP030150104, * the whole document * | 8,11,12 | H04N19/156 H04N19/157 H04N19/147 |
| Y | PHILIPPE P ET AL: "EE2: Adaptive Primary Transform improvement", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0065, 5 October 2016 (2016-10-05), XP030150298, * the whole document * | 8,11,12 | |
| E | WO 2018/013953 A1 (QUALCOMM INC [US]) 18 January 2018 (2018-01-18) * pages 26-36 * | 1-15 | TECHNICAL FIELDS SEARCHED (IPC) H04N |
| A | CHEN J ET AL: "Algorithm description of Joint Exploration Test Model 7 (JEM7)", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G1001, 19 August 2017 (2017-08-19), XP030150980, * pages 28-30 * | 1-15 | |

The present search report has been drawn up for all claims

| Place of search | Date of completion of the search | Examiner |
|---|---|---|
| Munich | 31 May 2018 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 503 549 A1**

## ANNEX TO THE EUROPEAN SEARCH REPORT
## ON EUROPEAN PATENT APPLICATION NO.

EP 17 30 6894

31-05-2018

| Patent document cited in search report | | Publication date | Patent family member(s) | | Publication date |
|---|---|---|---|---|---|
| US 2016219290 | A1 | 28-07-2016 | BR | 112017016012 A2 | 20-03-2018 |
| | | | CA | 2971880 A1 | 04-08-2016 |
| | | | CN | 107211144 A | 26-09-2017 |
| | | | EA | 201791457 A1 | 29-12-2017 |
| | | | EP | 3251364 A1 | 06-12-2017 |
| | | | JP | 2018506905 A | 08-03-2018 |
| | | | KR | 20170107452 A | 25-09-2017 |
| | | | TW | 201637446 A | 16-10-2016 |
| | | | US | 2016219290 A1 | 28-07-2016 |
| | | | WO | 2016123091 A1 | 04-08-2016 |
| WO 2018013953 | A1 | 18-01-2018 | US | 2018020218 A1 | 18-01-2018 |
| | | | WO | 2018013953 A1 | 18-01-2018 |